# EUROPEAN PATENT SPECIFICATION

(11) **EP 2 763 382 B1**
(45) Date of publication and mention of the grant of the patent: **09.10.2019**
(21) Application number: 13153794.6
(22) Date of filing: 04.02.2013
(51) Int. Cl.: H04M 1/23, G06F 3/0489, G06F 1/16

(54) **Hybrid Keyboard For Mobile Device**
Hybridtastatur für eine mobile Vorrichtung
Clavier hybride de dispositif mobile

(43) Date of publication of application: 06.08.2014
(73) Proprietor: BlackBerry Limited, Waterloo, ON N2K 0A7 (CA)
(72) Inventor: Mortel, Melecio Leano, Waterloo, Ontario N2L 3W8 (CA)
(74) Representative: MERH-IP Matias Erny Reichl Hoffmann Patentanwälte PartG mbB

(56) References cited:
- WO-A1-2007/084078
- WO-A1-2008/029492
- US-A1- 2002 097 227
- US-A1- 2011 061 017
- US-A1- 2011 241 909

## Description

### TECHNICAL FIELD

The present technology relates generally to mobile devices and, in particular, to user interfaces for mobile devices.

### BACKGROUND

Mobile devices conventionally have either a physical keyboard/keypad or a virtual keyboard/keypad that is selectively displayable on a touch-sensitive screen. In the former case, the physical keyboard/keypad occupies a significant proportion of the available frontal space on the device. Virtual keyboards, when displayed, also tend to occupy a significant proportion of the screen. One solution has been to provide the device with a slide-out keyboard but this adds girth, weight and complexity to the device. Another solution has been to provide the device with either smaller keys or fewer keys. Devices with keys that are too small make typing challenging. Devices with fewer keys than a minimal QWERTY keyboard (i.e. having multiple characters selectable by the same key) are generally not ergonomic for typing. Thus, there remains a real need for a user interface technology for mobile devices that addresses this technical problem.

WO 2007/084078 A1 discloses a keyboard is equipped with sensors or sensing structures for perceiving a finger's presence. It allows a single manual movement applied to a button, such as a key press action, to select any one of the optional characters overlaid on a button for inputting. This provides an efficient, flexible, and accurate text entry method. Such a keyboard or portable device avoids or lessens the problems of misspelling of predictive texting and slow typing speed associated with the conventional multi tapping single entry techniques. Furthermore, it can be implemented with other existing text entry techniques together in the same phone. Since this proposed technique, known as the single tap selective entry technique, conforms to the commonly accepted pattern of using a large-sized computer keyboard and requires little or no training, it is easier to be adopted by public for a more friendly, precise and speedy messaging operation.

WO 2008/029492 A1 discloses that it is possible to provide an input device capable of rapidly selecting and confirming an input character with simple operation without changing the group configuration of the numbers and characters fixed to the push buttons already widely spread as input devices of numbers and characters of a mobile device such as a mobile telephone and a mobile terminal. The input device includes: two key groups formed by keys to, to each of which a plurality of character data are assigned and which are arranged in left and right rows; an auxiliary display used when a first signal is inputted by one of the keys, for displaying the plurality of character data assigned to the key in a tandem so as to correspond to the key arrangement of the opposite key group at the left or the right side; and a control unit used when a second signal is inputted by one of the keys of the key group of the opposite side after the first signal is inputted by one of the keys, for inputting the character data corresponding to the key which has inputted the second signal according to the arrangement of the plurality of character data displayed in the auxiliary display.

US 2002/0097227 A1 discloses a keyboard type input device that has multiple key positions provided as character entry keys. Each key corresponds to one key in the selected row of the conventional QWERTY keyboard. A second set of control buttons provide for the selection of which row of a conventional QWERTY keyboard are represented by the character keys in addition to other functions such as case shift, and alpha-numerical control functions. A selected row is shown on a display, as visual feedback.

### BRIEF DESCRIPTION OF THE DRAWINGS

Further features and advantages of the present technology will become apparent from the following detailed description, taken in combination with the appended drawings, in which:
FIG. 1 is a depiction of a mobile device on which the present technology may be implemented, the depiction including a schematic depiction of some components of the mobile device;
FIG. 2 is a depiction of a mobile device having a hybrid keyboard in accordance with one implementation of the technology;
FIG. 3 depicts the mobile device displaying characters of the top left row of keys and characters of the middle right row of keys;
FIG. 4 depicts the mobile device displaying only the middle right row of keys;
FIG. 5 depicts the mobile device displaying characters of the top left row of keys and characters of the top right row of keys;
FIG. 6 depicts the mobile device displaying characters of the middle left row of keys and characters of the bottom right row of keys;
FIG. 7 depicts the mobile device displaying characters of the top left row of keys and characters of the top right row of keys, wherein the keys comprise key labels;
FIG. 8 depicts a mobile device with another form of hybrid keyboard;
FIG. 9 depicts a mobile device in which the hybrid keyboard is grouped into ten groups of keys;
FIG. 10 depicts a mobile device in which the hybrid keyboard is grouped into four groups of keys;
FIG. 11 depicts a mobile device in which the hybrid keyboard has four rows of keys with no spacing between each of the rows;
FIG. 12 depicts a mobile device in which the keys are arranged in angled groups of keys;
FIG. 13 depicts a mobile device in which bottom portion of the display comprises a character window or panel for displaying the characters corresponding to the keys of the selected groups;
FIG. 14 depicts a mobile device in which the character window displays two rows of characters corresponding to two left-side rows of keys;
FIG. 15 depicts a mobile device in which the selected keys are graphically identified using a surrounding circle and a surrounding diamond instead of a bolded font;
FIG. 16 depicts a mobile device in which the real-time spell checker suggests two possible letters to complete the word onscreen by pointing to two possible letters of the right-side row;
FIG. 17 depicts a mobile device in which the real-time spell checker suggests two possible letters to complete the word onscreen by removing all other letters of the right-side row; and
FIG. 18 depicts a mobile device with another type of hybrid keyboard in which the keys are integrated in the form of elongated touch-sensitive bars;
FIG. 19 depicts how the characters are sequentially highlighted as the user slides a finger along the elongated bar of the device of FIG. 18;
FIG. 20 depicts a further change in the highlighted character as the user continues to slide a finger along the elongated bar of the device of FIG. 18; and
FIG. 21 is a flowchart depicting a method performed by the mobile device in accordance with an implementation of the present technology.

It will be noted that throughout the appended drawings, like features are identified by like reference numerals.

### DETAILED DESCRIPTION

The present technology provides a hybrid keyboard for a mobile device. The hybrid keyboard has a plurality of smaller, grouped physical keys that, in response to receiving user input on one of the physical keys, causes the mobile device to display onscreen the characters corresponding to the keys of the selected group. The keys may have capacitive touch sensors to detect contact or proximity of a finger or thumb for the purposes of identifying which group of characters to display onscreen. The physical keys are smaller and/or more compactly disposed on the mobile device so as to occupy a lesser proportion of the total frontal space on the mobile device. The onscreen display of characters corresponding to groups of keys provides visual feedback to the user to guide the user's selection of the smaller keys. Haptic force feedback may also be employed to provide tactile user feedback to thus improve typing ergonomics and the overall user experience.

Accordingly, one aspect of the present technology is a method performed by a mobile device, the method comprising the steps defined in claim 1.

Another aspect of the present technology is a computer-readable medium comprising instructions in code which when loaded into a memory and executed by a processor of a mobile device cause the mobile device to perform the method defined in claim 1.

Another aspect of the present technology is a mobile device comprising the features defined in claim 10.

The details and particulars of these aspects of the technology will now be described below, by way of example, with reference to the drawings.

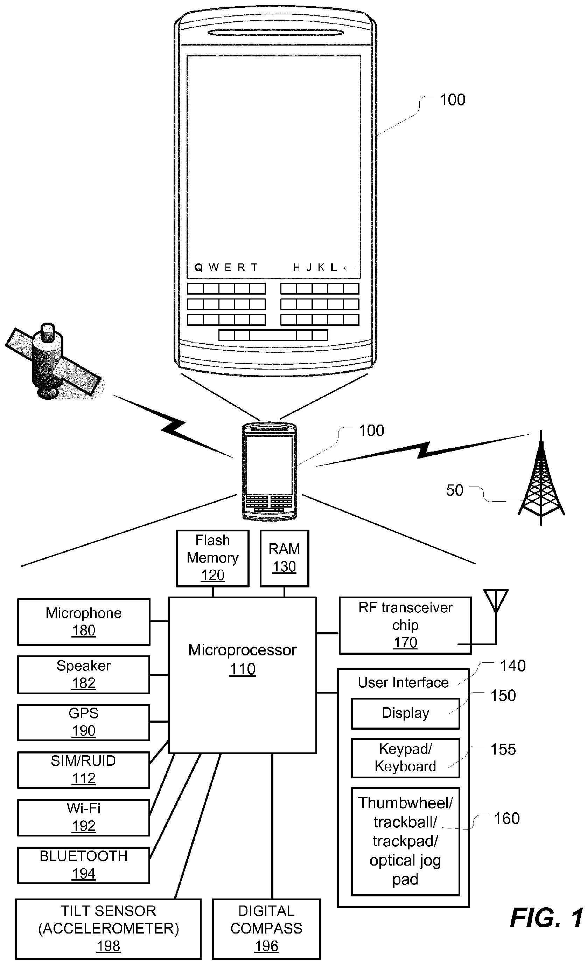

FIG. 1 is a depiction of a mobile device as one example of a computing device on which the present technology may be implemented. This mobile device, which is generally designated by reference numeral 100, includes a processor 110 and memory 120, 130 for executing one or more applications. The memory may include flash memory 120 and/or random access memory (RAM) 130. Other types or forms of memory may be used.

As depicted by way of example in FIG. 1, the mobile device 100 includes a user interface 140 for interacting with the mobile device and its applications. The user interface 140 may include one or more user input devices and output devices, such as a display screen 150 (e.g. an LCD or LED screen or touch-sensitive display screen), and a keyboard or keypad 155. The physical keyboard/keypad 155 together with the onscreen display 150 of the corresponding characters forms what shall be referred to herein as a hybrid keyboard/keypad. The user interface may further include an optical jog pad 160 and/or a thumbwheel, trackball, track pad or equivalent.

As depicted by way of example in FIG. 1, the mobile device 100 includes a transceiver 170 for communicating with other devices. The transceiver 170 may be a radiofrequency (RF) transceiver for wirelessly communicating with one or more base stations over a cellular wireless network using cellular communication protocols and standards for both voice calls and packet data transfer such as GSM, CDMA, GPRS, EDGE, UMTS, LTE, etc.

Where the mobile device 100 is a wireless communications device, the device may include a Subscriber Identity Module (SIM) card 112 for GSM-type devices or a Re-Usable Identification Module (RUIM) card for CDMA-type devices. The RF transceiver 170 may include separate voice and data channels.

The mobile device 100 may also include one or more ports for wired connections, e.g. USB, HDMI, FireWire (IEEE 1394), etc.

The mobile device 100 may further include a microphone 180 for transforming voice input in the form of sound waves into an electrical signal, a speaker 182 and/or an earphone jack.

The mobile device 100 may also include a positioning subsystem such as a Global Positioning System (GPS) receiver 190 (e.g. in the form of a chip or chipset) for receiving GPS radio signals transmitted from one or more orbiting GPS satellites. Any other global navigation satellite system (GNSS) receiver may be used in lieu of GPS.

Optionally, the mobile device 100 may include a Wi-Fi™ transceiver 192, a Bluetooth® transceiver 194, and/or a near-field communications (NFC) chip. The computing device 100 may also optionally include a transceiver for WiMax™ (IEEE 802.16), a transceiver for ZigBee® (IEEE 802.15.4-2003 or other wireless personal area networks), an infrared transceiver or an ultra-wideband transceiver.

Optionally, the mobile device may include other sensors like a digital compass 196 and/or a tilt sensor or accelerometer 198. The mobile device may include other components not mentioned herein.

A mobile device is one example of a computing device 100 on which the present technology may be implemented. The technology is particularly useful for small devices that have small keyboards and limited space for display screens. Although this technology is primarily intended to be applied to mobile devices such as handheld electronic devices, personal communications devices, smart phones, cell phones, satellite phones, it may also be used on tablets, laptops, palmtops, notebooks, desktop personal computers, handheld game consoles, kiosks, or other such computing devices. The technologies disclosed herein may be employed on either wireless or wired devices or even on devices with no data communication capability. The technology may furthermore be applied to vehicle computer systems having a small keyboard and display or to any computer-controlled machinery, apparatus, or equipment that includes a physical keyboard and display.

To implement this novel technology, the user interface 140 of the mobile device 100 has a user input device that includes a plurality of physical keys. In most embodiments, the keys are entirely disposed on the front face of the mobile device below the display screen. The keys together constitute the keyboard 155.

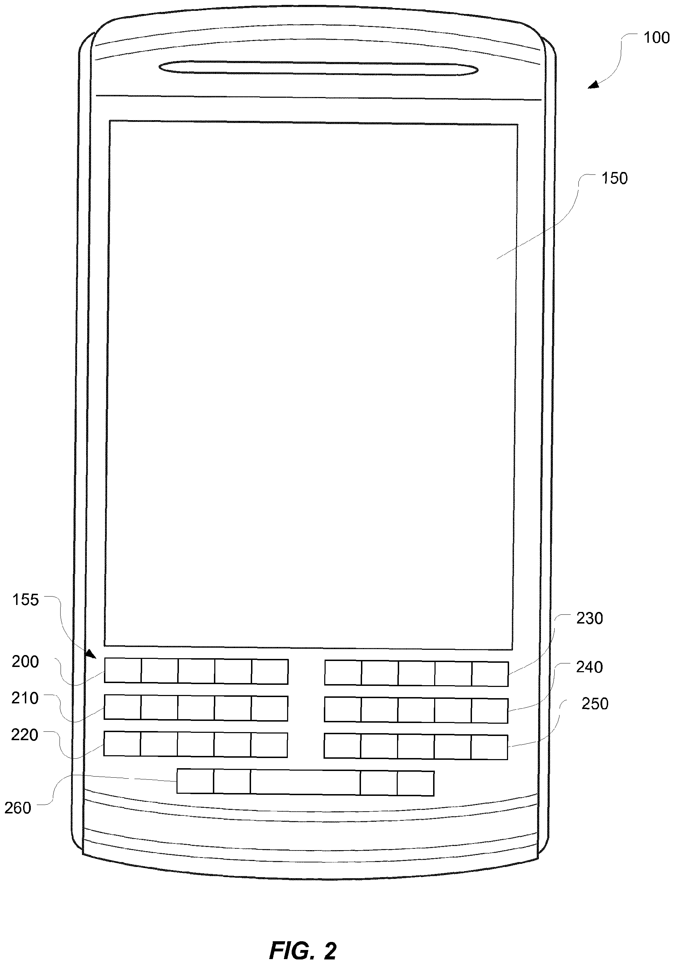

These keys may be arranged in a plurality of groups as shown in FIGS. 1 and 2. In the keyboard 155 shown by way of example in FIGS. 1 and 2, there are seven groups of keys, namely a top left-side group of keys 200, a middle left-side group of keys 210, a lower left-side group of keys 220, a top right-side group of keys 230, a middle right-side group of keys 240, a lower right-side group of keys 250 and a bottom group of keys 260. The groups of keys in this example keyboard 155 are all arranged in rows of adjacent keys.

In the embodiments depicted by way of example in FIGS. 1 and 2, the height of each of the keys is the same although the height of the keys may vary in other embodiments. As shown in this embodiment, the width of all but one key (e.g. the space bar key) is the same for all other keys, but again this may vary in other embodiments. There is a small space shown in FIG. 1 and FIG. 2 between the top row (key groups 200, 230) and the middle row (key groups 210, 240) and a small space between the middle row (key groups 210, 240) and the lower row (key groups 220, 250). There is also a small space between the lower row (key groups 220, 250) and the bottom row (key group 260). This space may be varied or even eliminated. In this illustrated embodiment, the space between rows is less than the height of the keys although this is not necessarily the case. The left-side groups of keys are separated or divided from the right-side groups of keys by a space although this space may be varied or eliminated in other embodiments.

In the illustrated embodiment, the first six groups of keys form three aligned rows and two columns with the seventh group extending parallel to the lower row. In other words, the top row of left-side keys is substantially aligned with the top row of right-side keys, the middle row of left-side keys is substantially aligned with the middle row of right-side keys, and the lower row of left-side keys is substantially aligned with the lower row of right-side keys. To recap, in this embodiment, the top left-side row thus defines the first group of keys 200, the middle left-side row the second group of keys 210, and the lower left-side row the third group of keys 220. Likewise, the top right-side row defines the fourth group of keys 230, the middle right-side row the fifth group of keys 240, and the lower right-side row the sixth group of keys 250. The bottom row (which contains the space bar in this example) defines the seventh group of keys 260.

The number of rows of keys and the groupings of keys may be varied as will be described and illustrated in greater detail below.

The processor 110 of the mobile device 100 is operatively coupled to the user input device to receive user input from the user input device. The processor is configured to identify which group of keys has received the user input (i.e. based on the signals received from by the processor from the keyboard). The display is operatively coupled to the processor for displaying the keys of the group in response to the user input. In other words, when contact or proximity of a finger or thumb to a key is detected, the entire group of keys is instantiated onscreen to enable the user to see which group of keys he or she is touching or proximate to.

In one embodiment, the user input device is a keyboard 155 comprising a plurality of capacitive touch keys. The capacitive touch keys enable the device to detect contact, touch or proximity of a finger or thumb to enable the device to identify or recognize the group of keys that the user is selecting. The user input device may, in one specific embodiment, be a keyboard comprising a plurality of capacitive touch keys having haptic feedback. Haptics provide mechanical feedback to the user to confirm, in a tactile manner, that one particular key has been pressed. To summarize, the capacitive touch keys with haptics provides a multistep input to the processor: first, the processor receives a signal indicating that a finger or thumb is lightly touching or proximate to a given key. The group of keys to which the touched or proximal key belongs then determines which group of keys is to be instantiated onscreen. Optionally the key being touch or to which the finger or thumb is most proximate will be highlighted. Subsequently, or in some instances almost immediately thereafter, the processor receives a signal from the keyboard that a given key instantiated onscreen has been pressed. This optionally causes a haptics controller to generate a force feedback signal to exert an upward force on the key against the finger or thumb of the user. When the key is pressed, the highlighting of the selected character may also change (e.g. the selected character onscreen may blink or change its font, size, color, shading, holding, italics, etc.). This visual change may be used to indicate entry or input of the character corresponding to the key that has been pressed.

Although the keys of the keyboard 155 are depicted as being configured in a QWERTY keyboard layout, other keyboard or keypad arrangements or layouts may be used, e.g. DVORAK (Dvorak Simplified Keyboard), AZERTY, Colemak, etc.

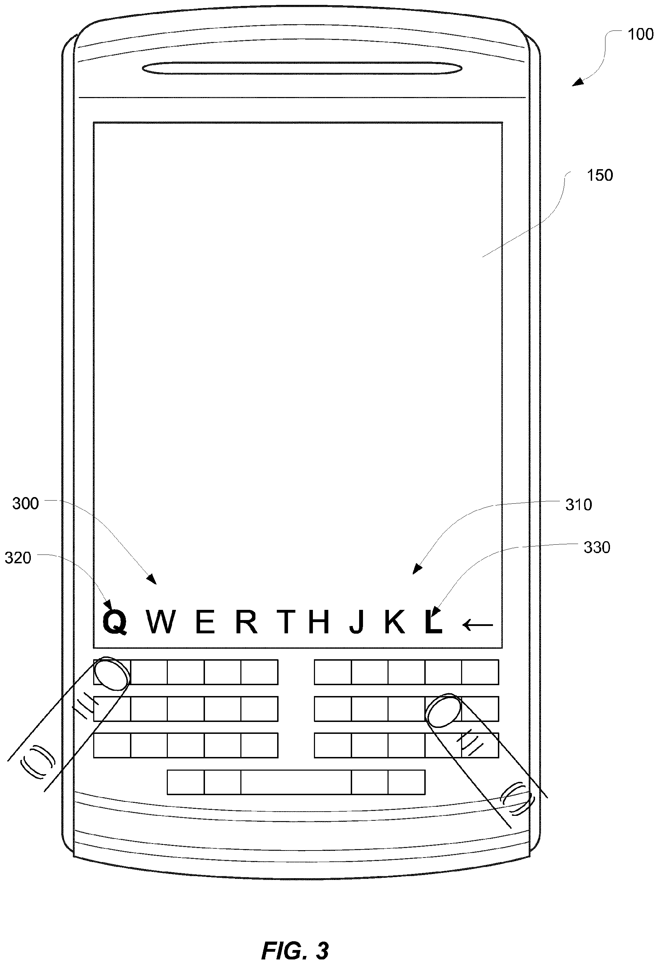

FIGS. 3-6 illustrate the operation of the hybrid keyboard of FIGS. 1 and 2. As shown in these four examples, any combination of rows of characters may be instantiated (displayed on the display screen) in response to user input (or in response to first and second user input). First and second user input may be synchronous (concurrent) or sequential. The group of characters may be displayed for a predetermined period of time before the group disappears, for example, between 1 and 5 seconds or for any user-configurable amount of time. Alternatively, the characters may persist on the display until further user input is received to supplant the group of characters.

FIG. 3 depicts the mobile device displaying characters of the top left row of keys and characters of the middle right row of keys. In the example of FIG. 3, the five characters Q, W, E, R and T (designated collectively by reference numeral 300) corresponding to the five keys of the first group (top left-side row) are instantiated (i.e. displayed) in response to the first user input (of the left hand). The character Q (designated by reference numeral 320) is highlighted (e.g. bolded) to indicate that the Q key has been touched or that the left thumb or finger of the user is proximate to the Q key. Likewise, the characters H, J, K, L and ← (delete) corresponding to the right-side middle row (fifth group) are instantiated in response to the second user input (of the right hand). The second set of instantiated characters, collectively denoted by reference numeral 310, may be displayed along the bottom portion of the screen in alignment with the first set of characters 300. Spacing may provided between the two sets of characters to clearly delineate the two sets. The characters may optionally be aligned with their respective keys. In this example, the letter L (denoted by reference numeral 330) is highlighted to indicate that the user's thumb or finger is contacting, or is proximate to, the L key.

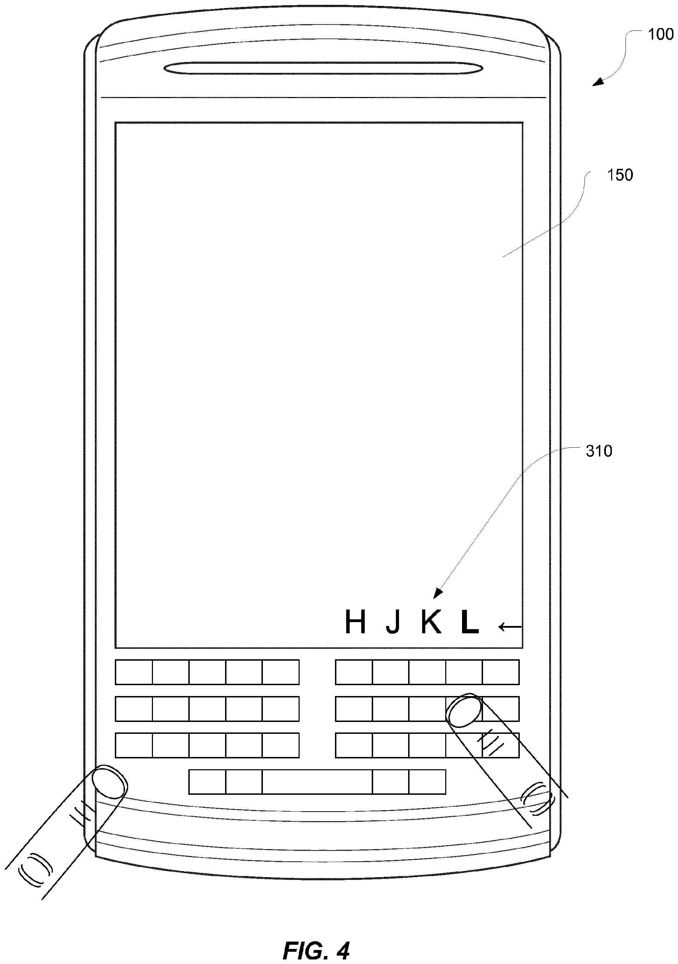

FIG. 4 depicts the mobile device displaying only the middle right row of keys. In this case, only the characters H, J, K, L and ← (delete) corresponding to the right-side middle row (fifth group) are displayed. Thus, the left-side and right-side groups of keys may be instantiated independently of each other.

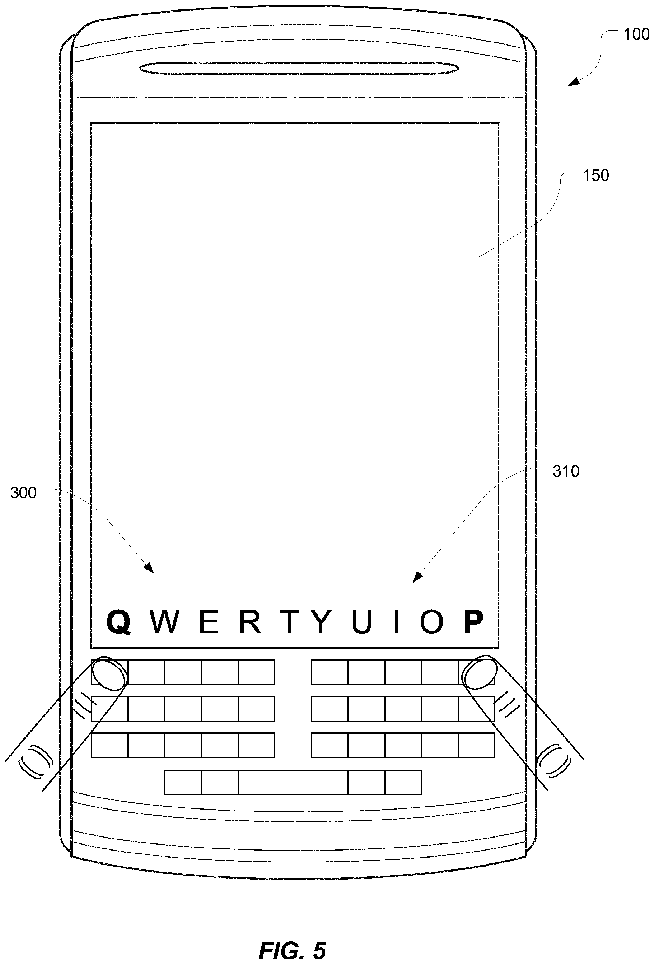

As another example, FIG. 5 depicts the mobile device displaying a first set of characters 300 corresponding to the top left-side group of keys and a second set of characters 310 corresponding to the top right-side group of keys.

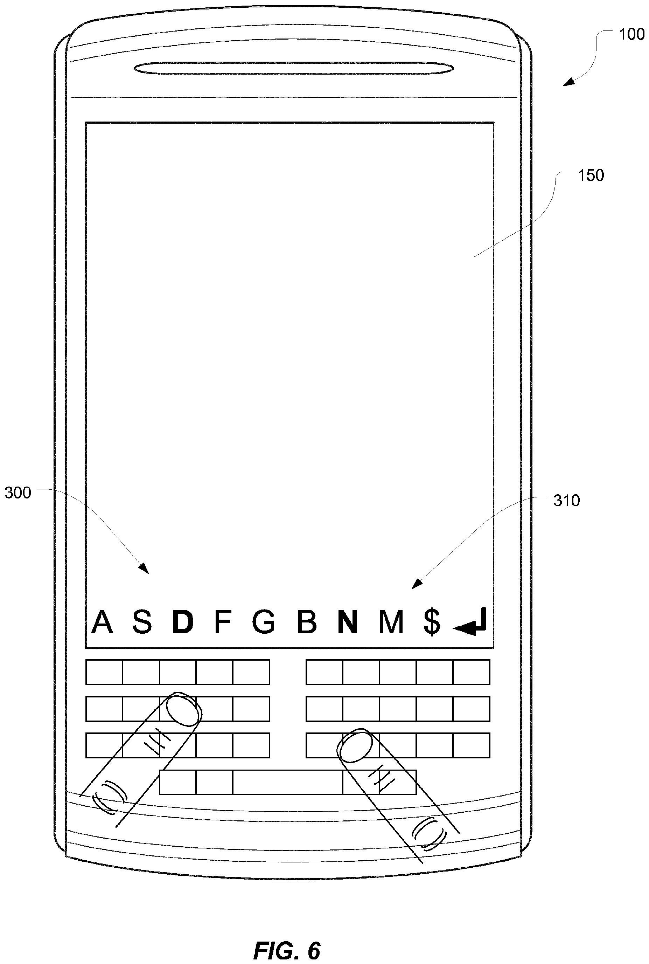

As a further example, FIG. 6 depicts the mobile device displaying a first set of characters 300 drawn from the middle left-side row of keys and a second set of characters 310 drawn from the bottom right-side row of keys.

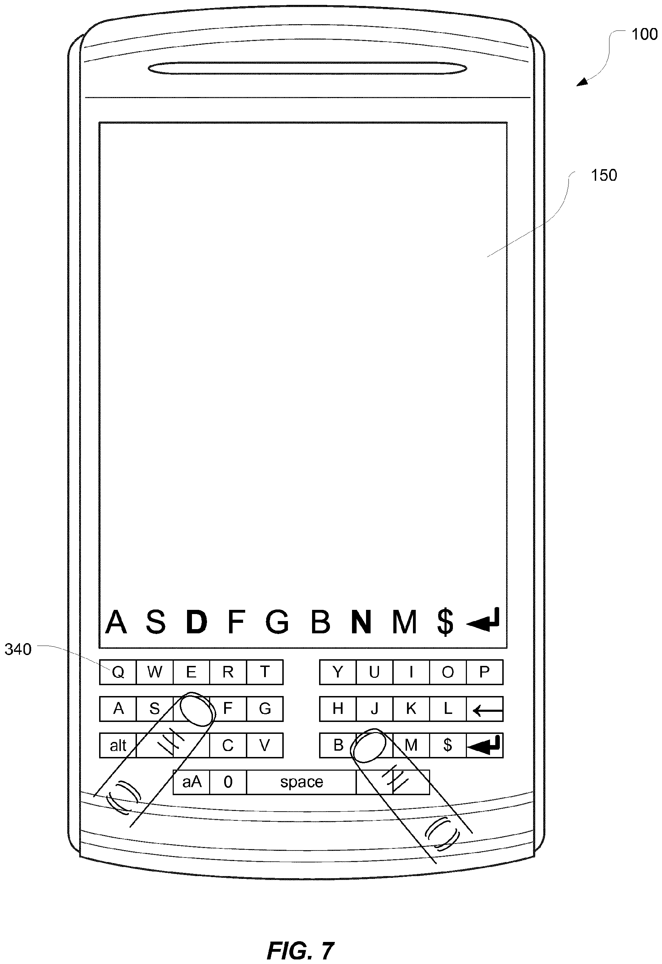

In another embodiment, as illustrated by way of example in FIG. 7, the keys 340 of the keyboard may have key labels. The key labels may be alphanumeric (e.g. A-Z, 0-9) and may optionally include mathematical operators (+, - , =, etc.) and symbols (e.g. exclamation mark, question mark, quotation mark, apostrophe, asterisk, parentheses, brackets, forward slash, back slash and other common keyboard symbols such as @, #, $, %, &, etc.) plus optionally various other functional keys such as, for example, enter, shift, tab, control, alt, delete, space, escape, caps lock, number lock, F1-F12, arrow keys, a separate number pad, etc. For a mobile device, however, the keyboard may have a limited number of keys due to space constraints. For example, the keyboard may include letters A-Z, numbers 0-9 superimposed on ten keys that also have letters, and a few main symbols and functional keys. FIG. 7 depicts one example of such a mobile device displaying characters of the top left row of keys and characters of the top right row of keys, wherein the keys comprise key labels. In this simplified example, only the letters and a few illustrative symbols and functional keys are depicted. The keys 340 may be backlit in one particular embodiment.

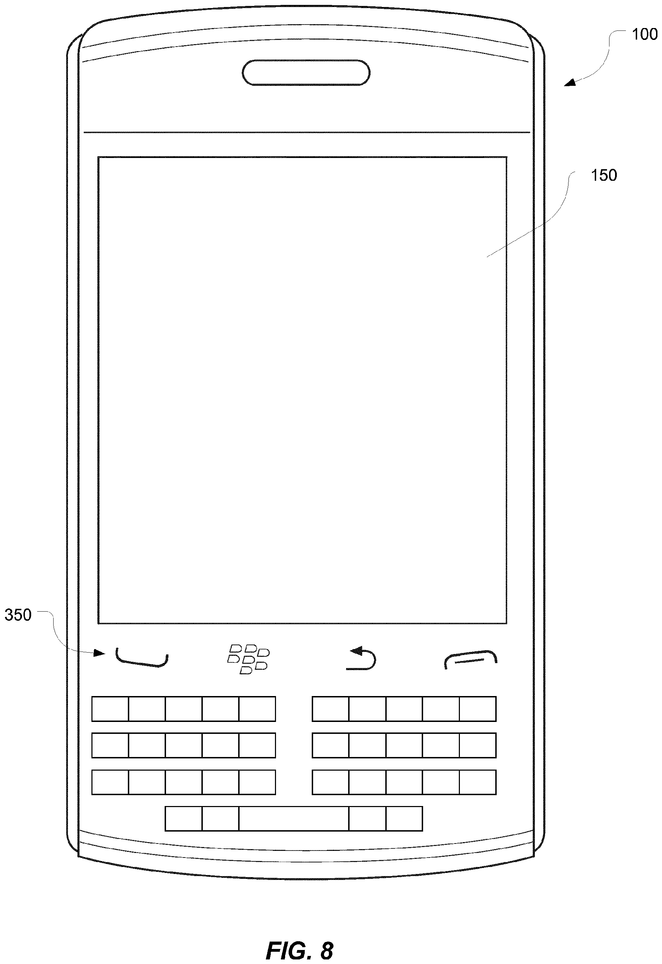

FIG. 8 depicts a mobile device with another form of hybrid keyboard in which basic control buttons 350 are added to the user interface. From left to right, the control buttons 350 depicted are a call/talk button, a menu button, an escape/back button, an end call/power on/off button. Other buttons, keys, hotkeys, wheels, pads, or other input devices may be disposed on the front, back, top, bottom or sides of the device. In one embodiment, these control buttons are not displayed onscreen in response to user input, only the key groups of the keyboard. In another embodiment, these basic control buttons may also be displayed onscreen, e.g. as icons, in response to user input.

In the embodiment depicted by way of example in FIG. 8, the user input device comprises a plurality of left-side rows of keys and a plurality of right-side rows of keys as was the case in the embodiment of FIGS. 1 and 2. More specifically, the user input device shown by way of example in FIG. 8 has three left-side rows of keys, three right-side rows of keys aligned with but spaced apart from the left-side rows of keys, and a bottom row of keys including a space bar key. These rows form the keyboard 155. The four device keys are part of the input device but are not part of the keyboard in this case. As was the case with the first embodiment, the keys in FIG. 8 comprise capacitive touch sensors with haptic feedback and are arranged in a QWERTY keyboard configuration as seven groups of keys consisting of an upper row split into left and right groups, a middle row split into left and right groups, a lower row split into left and right groups, and a bottom row disposed beneath the lower row.

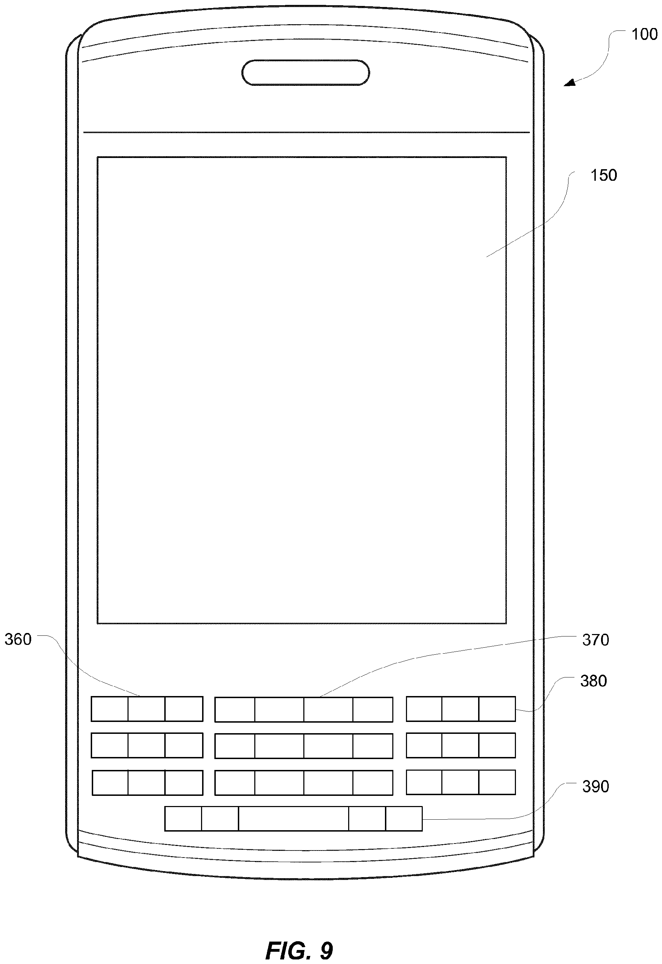

As mentioned above, the groupings of the keys may be varied. For example, FIG. 9 depicts a mobile device in which the hybrid keyboard is grouped into ten groups of keys. In this example, there are three left-side rows of keys 360 (each row consisting of 3 keys), three middle rows of keys 370 (each row consisting of 5 keys) and three right-side rows of keys 380 (each row consisting of 3 keys). There is also a bottom row of keys 390. The total number of keys and their configuration may thus be varied for different types of devices.

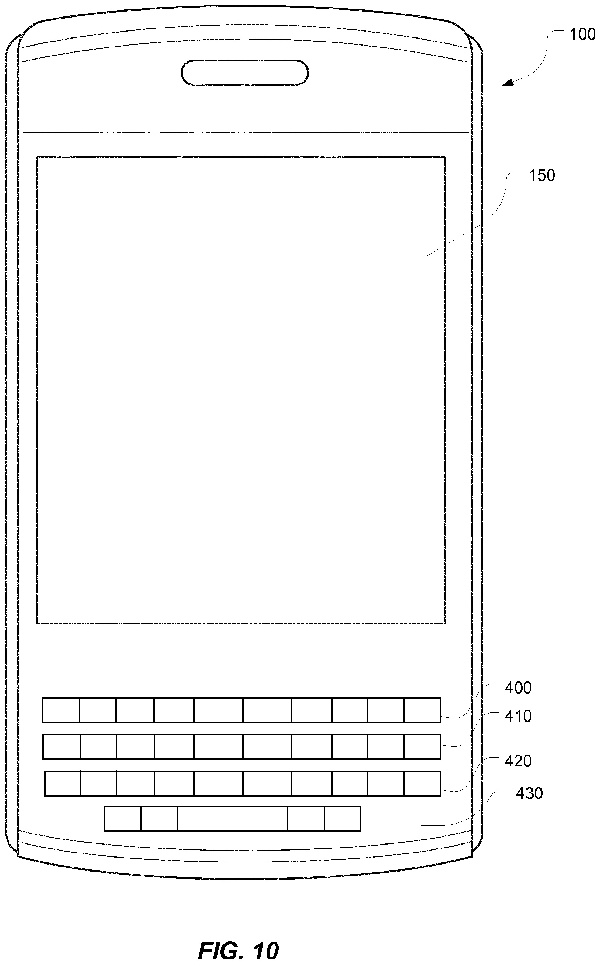

The split rows may also replaced with integral rows of keys as shown by way of example in FIG. 10. FIG. 10 depicts a mobile device in which the hybrid keyboard is grouped into four groups of keys, i.e. four rows of keys, namely a first row 400 of 10 keys, a second row 410 of 10 keys, a third row 420 of 10 keys and a fourth row 430 of 5 keys. Again, the number of keys may vary in other cases.

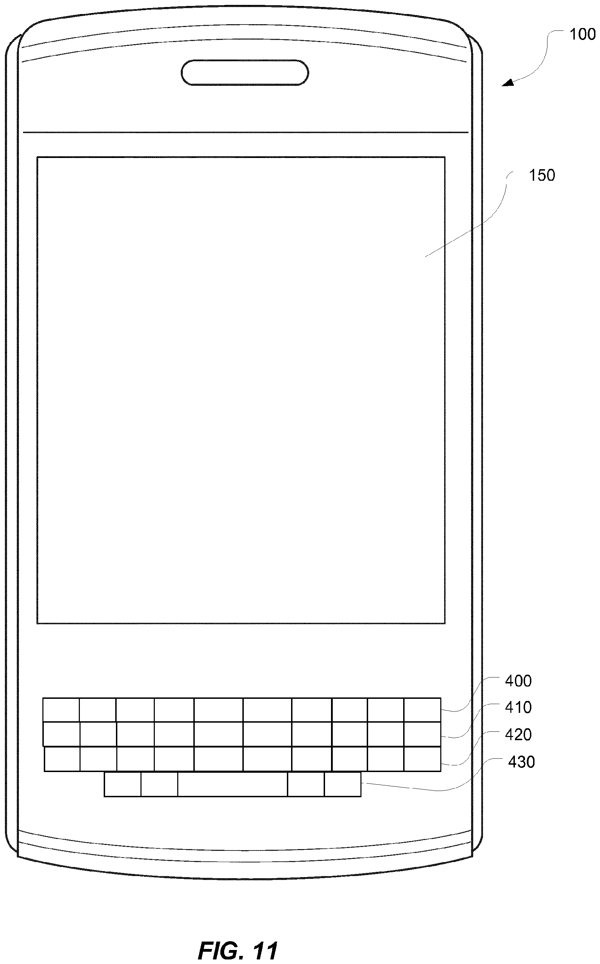

FIG. 11 depicts a mobile device in which the hybrid keyboard has four rows of keys (400, 410, 420, 430) with no spacing between each of the rows. Each of these rows is considered a separate group of keys.

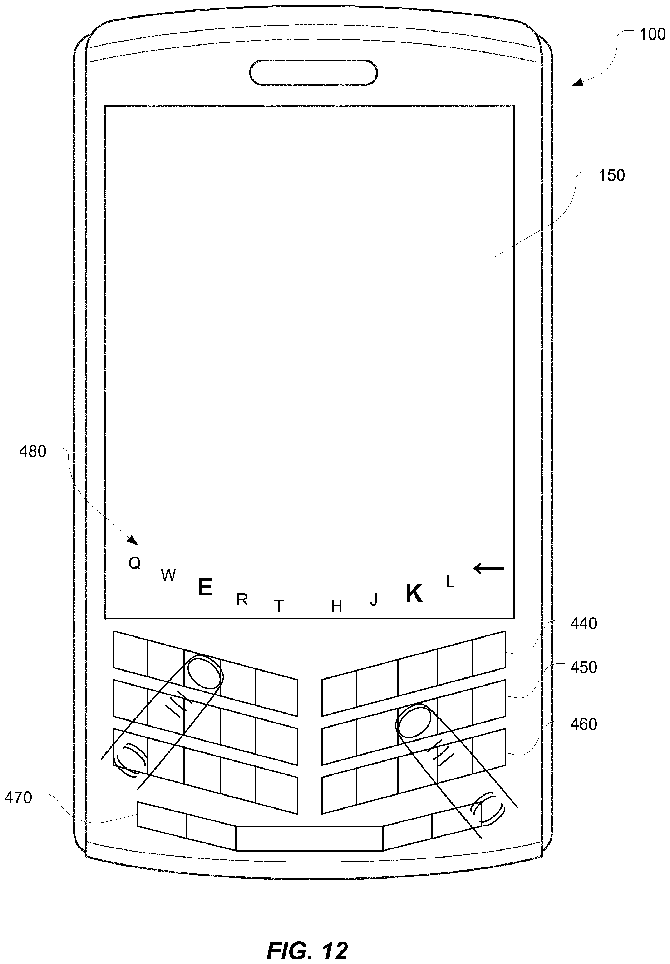

In the previously illustrated embodiments, the keys are arranged in straight lines. In other embodiments, the keys may be curved, angled or disposed in some other fashion. For example, FIG. 12 depicts a mobile device in which the keys are arranged in angled groups of keys. Thus, the hybrid keyboard of FIG. 12 contains a first pair of angled rows 440, a second pair of angled rows 450, a third pair of angled rows 460, and a bottom row 470 having two angled keys on the left, a straight space bar (parallel to the display screen), and two other angled keys on the right of the space bar. In the embodiment depicted in FIG. 12, the selected characters E and K are highlighted not only by bolding but also by increasing their font size although the manner of graphically indicating the selected characters may be varied. In fact, it should be noted that it not necessary to highlight the selected characters at all but this is simply done to enhance the user experience.

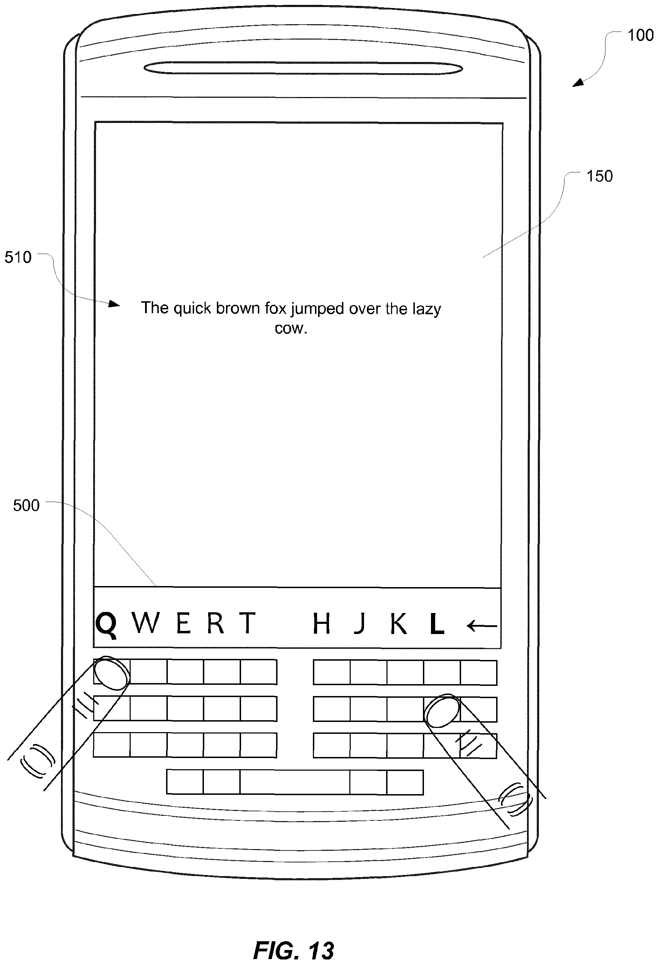

In the previously illustrated embodiments, the characters are displayed along a bottom portion of the display screen. In other embodiments, the characters may be displayed elsewhere on the display. In yet other embodiments, the characters may be displayed in a dedicated panel, window, dialog, area, zone or the like which is distinct, divided or separated from the remainder of the display screen. For example, FIG. 13 depicts a mobile device in which the bottom portion of the display comprises a character window 500 or panel for displaying the characters corresponding to the keys of the selected groups. This character window or panel is separated from the remainder of the content on the display screen by a border or divider to make it clear to the user that the characters are not part of any textual content 510 being displayed onscreen. Textual content may be any e-mail, word processor document, etc. Furthermore, the size, color and font of the characters displayed in the character window may be varied, user-configurable or automatically adjusted to differentiate from any other text onscreen. In the illustrated example of FIG. 13, the font of the textual content 510 being typed onscreen is, for example, Arial 12-point. The device may automatically change the font of the characters in the character window 500 to, for example, Candara 24-point to visually distinguish the characters instantiated by the hybrid keyboard and the text being typed in the main portion of the display.

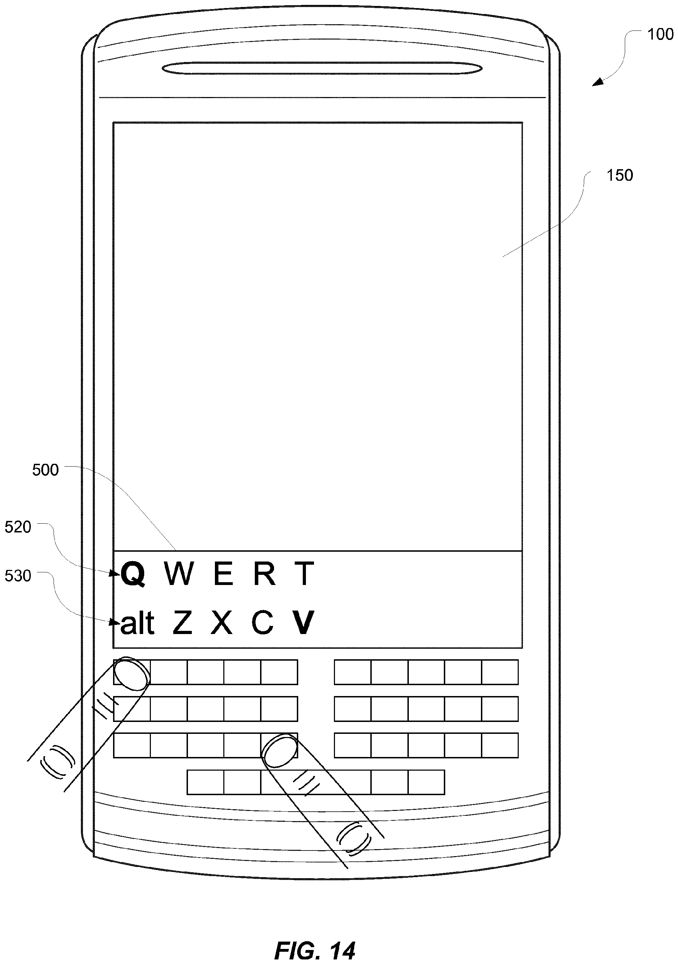

In the implementations illustrated thus far, there has been but a single row of characters displayed onscreen. However, in other implementations, there may be more than one row of characters. FIG. 14 depicts a mobile device in which the character window displays two vertically arranged rows of characters corresponding to two left-side rows of keys. These two left-side rows of characters may be invoked onscreen by receiving simultaneous, overlapping or sequential input on the corresponding left-side rows of keys. In one embodiment, a first type of highlighting may be used to indicate the letter corresponding to the key sensed by the capacitive touch sensor in the key whereas a second type of highlighting may be used to indicate the selected letter when the user actually depresses the key to select that letter. For example, a shadow may be shown when the user's finger or thumb contacts or hovers over the key (i.e. with sufficient proximity to be detected by the capacitive touch sensor). The character may blink or change color, size, font, etc. when the user actually presses on the key to input the letter. Alternatively, the graphical highlighting may be a larger font and/or a bolded and/or italicized and/or underlined font. A different color, arrow, pointer, etc. may also be used to identify a particular character.

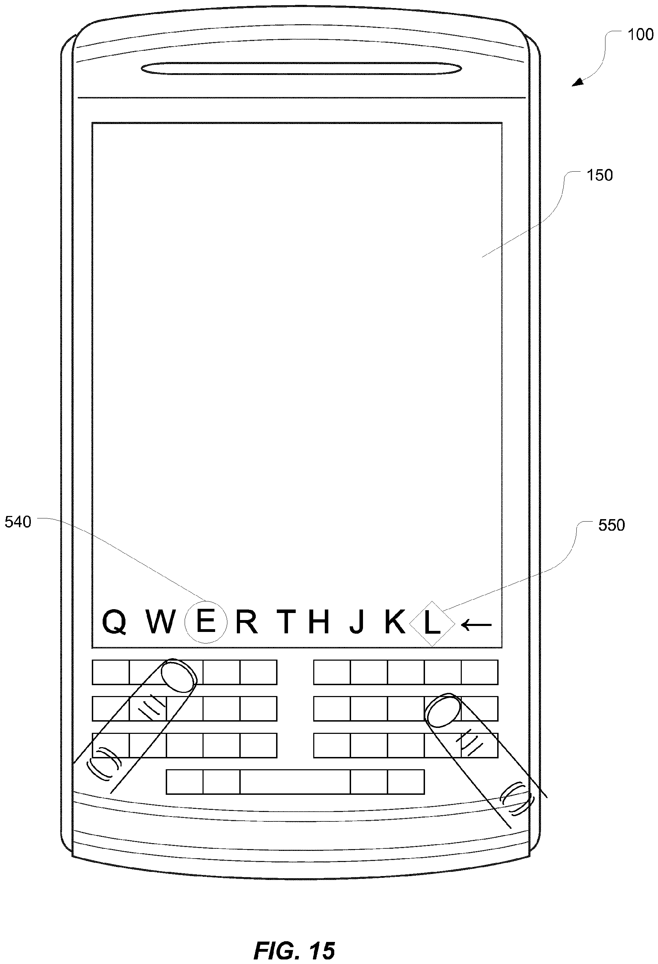

FIG. 15 depicts a mobile device in which the selected keys are graphically identified using a circular or polygonal border surrounding the character corresponding to the selected key (instead of a bolded or different character font). For example, the circular or polygonal border may simply be a surrounding circle or a surrounding diamond (or any other desired shape).

In one implementation, the mobile device may implement a predictive word algorithm that dynamically predicts and suggests a completed word to the user based on the partial spelling of the word as it is being progressively typed. The next likely letter required to complete the predicted word may thus be indicated or highlighted in the character window to guide the user to the next letter required.

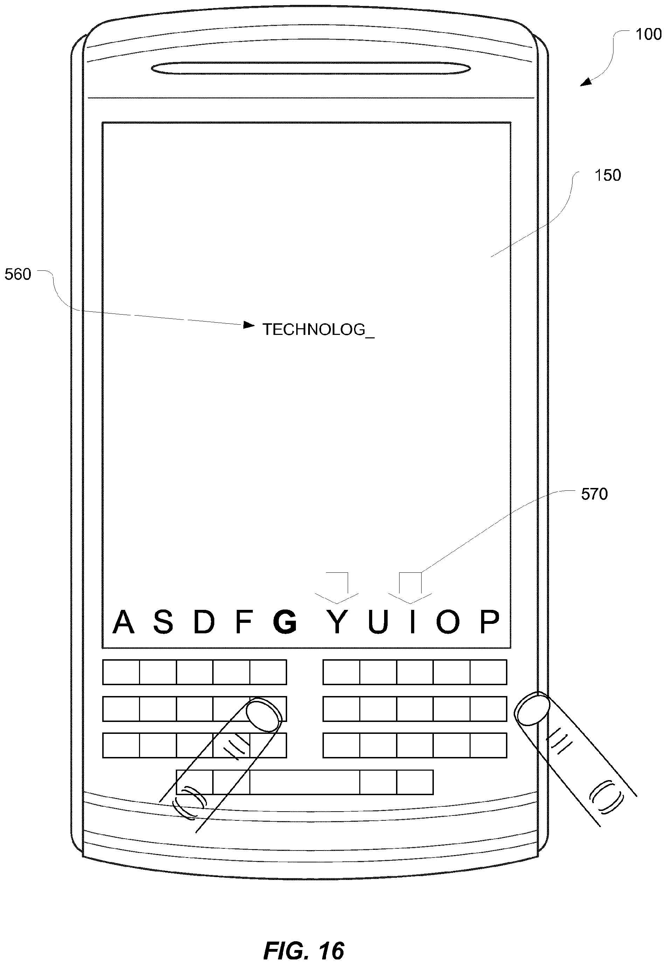

FIG. 16 depicts a mobile device in which a real-time spell checker executed by the processor of the device suggests two possible letters to complete the word onscreen by pointing to two possible letters of the right-side row. The word 560 being completed is predicted by the device to be either "Technology", "Technologies", "Technological", "Technologically" or "Technologist". To complete one of these words, the device determines that the next letter is thus either Y or I. The Y and I characters happen to be both in the top right-side row of keys. This key group is displayed with arrows 570 pointing to the two suggested letters Y and I. Note that this can work in two different ways: in the first case, the device instantiates the set of characters containing the suggested letter even if the user has not selected a group of characters; or, in the second case, the device only identifies a suggested letter for a set of characters that the user has already caused the device to instantiate.

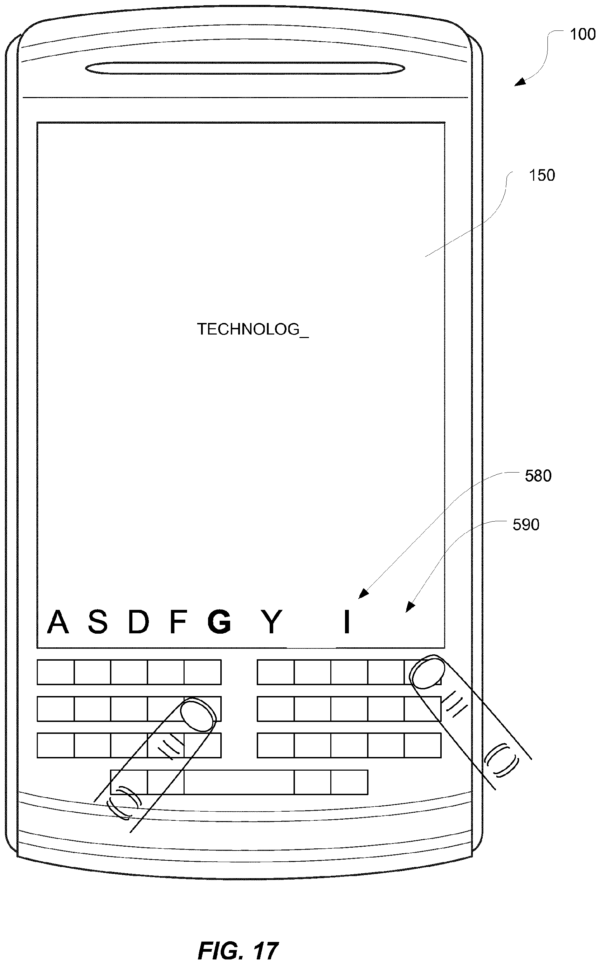

FIG. 17 depicts a mobile device in which the real-time spell checker suggests two possible letters to complete the word onscreen by removing all other letters of the right-side row. In this example, the same word letters Y and I are suggested to complete the word that has been partially typed onscreen. Rather than arrows, this example shows how all other letters U, O and P are eliminated (i.e. not rendered onscreen) as these cannot be possibly used to complete any known word. The suggested letters Y and I (denoted by 580) are thus displayed along with blank spaces 590. In one embodiment, the user can cause the invisible letters U, O, P to be displayed by touching the respective U, O or P keys. Thus, the device may permit the user to effectively override the suggestion algorithm at any time.

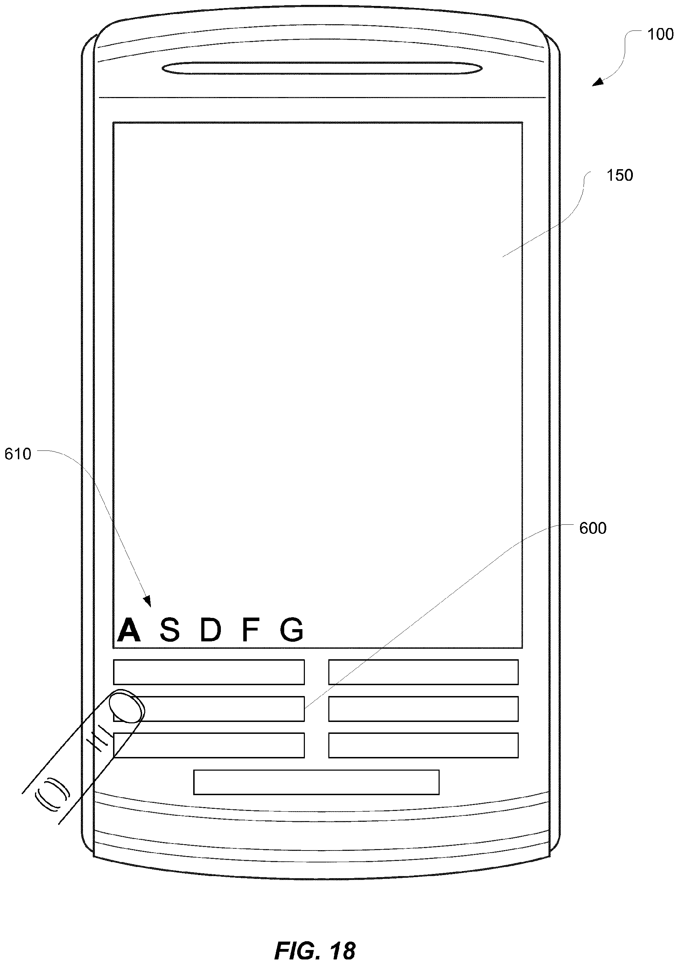

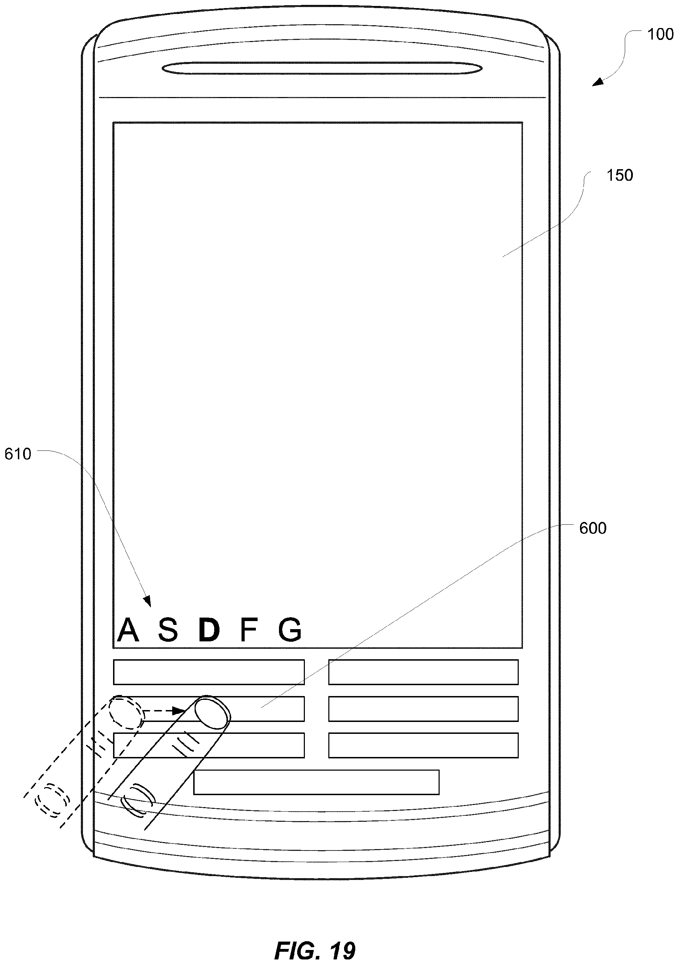

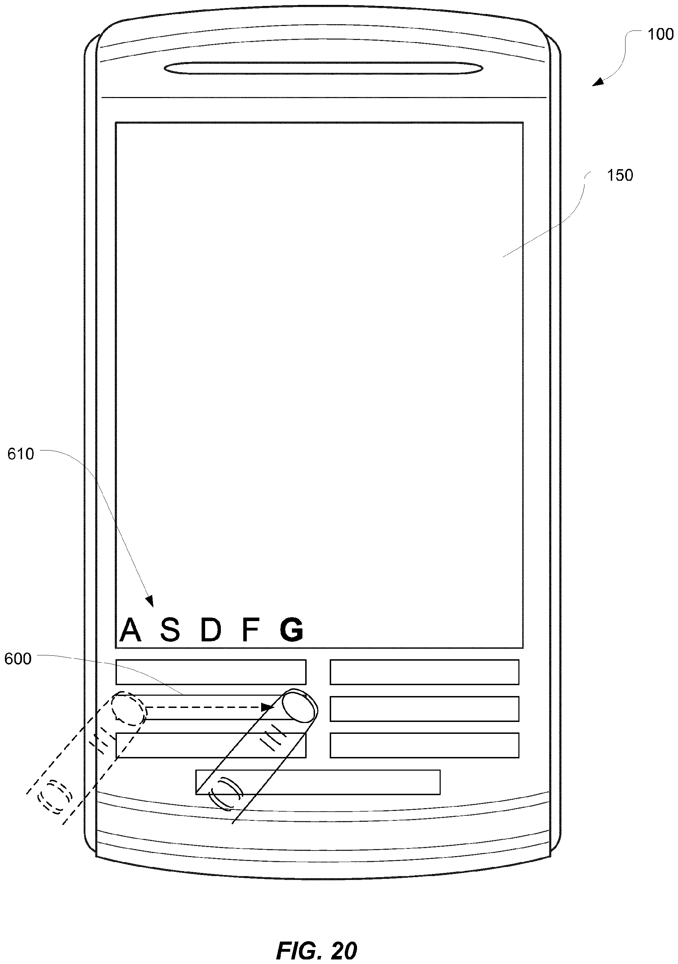

In the embodiment depicted by way of example in FIGS. 18-20, each row or group of keys is integrated in the form of a single elongated touch-sensitive bar 600 comprising a series of capacitive touch sensors within the bar that, in specific embodiments, are disposed in a linear and equidistantly spaced fashion within the elongated bar. To operate this form of keyboard, the user touches one of the seven bars to select the group of keys represented by the bar. For example, the upper left bar could represent Q, W, E, R, T, and the middle left bar could represent A, S, D, F, G, and so on. In response to this touch input, the characters 610 corresponding to the touched bar are instantiated (displayed) onscreen. To select one of the displayed characters, the user slides his or her finger along the elongated bar until the desired character is highlighted. This is illustrated by the sequence of FIGS. 18-20. As shown in these figures, as the user's finger or thumb slides along the bar and is detected by the row of capacitive touch sensors, the corresponding character is highlighted or otherwise graphically indicated to provide visual feedback to the user. The user can then click on or depress the bar at the given location along the bar to select the key being displayed onscreen. The bar may be monolithic (completely smooth with no demarcations between virtual keys) or it may have grooves or lighting between virtual keys to guide the user as the user slides his or her finger along the bar. In effect, the bar acts as a group of integrated keys. As will be appreciated, the user may slide his or her finger left to right or right to left or repeatedly back and forth. The displayed characters will in most embodiments disappear after the touch input is removed, which may occur immediately or after a predetermined period of time. The user may also touch any point along the bar to cause the row of characters to be instantiated onscreen. The user may touch two bars simultaneously, e.g. with left and right hands. In that case, the device will instantiate the characters associated with the left and rights bars that are receiving touch input.

The hybrid keyboard described above provides a novel user interface and also a novel method of receiving and displaying user input.

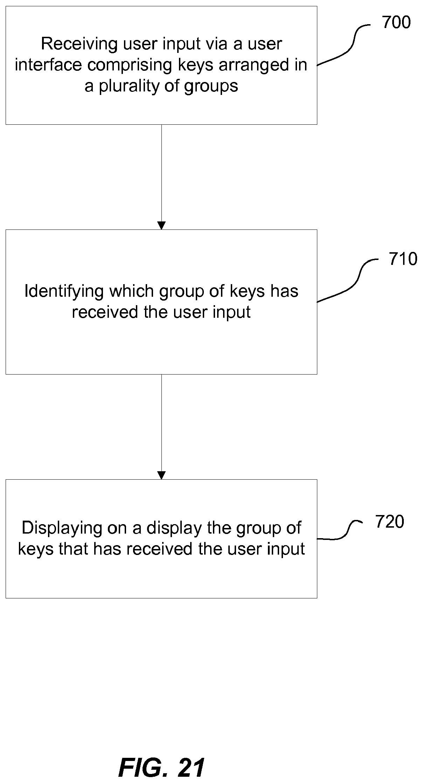

As depicted by way of example in FIG. 21, a method performed by a mobile device entails receiving (step 700) user input via a user interface comprising keys arranged in a plurality of groups, identifying (step 710) which group of keys has received the user input, and displaying (step 720) on a display the group of keys that has received the user input.

In one implementation of this method, displaying the characters entails displaying the characters along a bottom portion of the display. In other words, each of the characters corresponding to the keys of the group of keys that has received the user input is displayed along the bottom portion of the display screen.

In a further implementation, the device graphically highlights a selected character corresponding to the key of the group of keys that has received the user input.

In one specific implementation, the keys are arranged in a plurality of left-side rows and a plurality of right-side rows. The method, in this specific implementation, displays characters corresponding to one of the plurality of left-side rows that has received first user input and simultaneously displays characters corresponding to one of the plurality of right-side rows that has received second user input.

Receiving user input may entail detecting one of a plurality of rows of keys using capacitive touch sensors in the keys. Detection of a thumb or finger may be done by detecting contact with the key, a minimum force (pressure) exerted on the key, or even the proximity of the finger or thumb to the key. Other (non-capacitive-based) technologies may be used to detect the touch input provided by the user. Receiving user input further may also entail providing mechanical haptic feedback in response to touching the key.

In one further implementation, displaying the group of keys comprises predicting a word being spelled and graphically indicating a suggested key to complete the word. This may involve highlighting, bolding or emphasizing letters, increasing or changing the font or color of certain letters. Conversely, letters that are not possibly required to complete a word may be removed, greyed out, minimized or rendered semi-transparent or invisible. Word-completion suggestions may be activated or deactivated in response to user input.

Any of the methods disclosed herein may be implemented in hardware, software, firmware or any combination thereof. Where implemented as software, the method steps, acts or operations may be programmed or coded as computer-readable instructions and recorded electronically, magnetically or optically on a fixed, permanent, non-volatile or non-transitory computer-readable medium, computer-readable memory, machine-readable memory or computer program product. In other words, the computer-readable memory or computer-readable medium comprises instructions in code which when loaded into a memory and executed on a processor of a computing device cause the computing device to perform one or more of the foregoing method(s).

A computer-readable medium can be any means that contain, store, communicate, propagate or transport the program for use by or in connection with the instruction execution system, apparatus or device. The computer-readable medium may be electronic, magnetic, optical, electromagnetic, infrared or any semiconductor system or device. For example, computer executable code to perform the methods disclosed herein may be tangibly recorded on a computer-readable medium including, but not limited to, a floppy-disk, a CD-ROM, a DVD, RAM, ROM, EPROM, Flash Memory or any suitable memory card, etc. The method may also be implemented in hardware. A hardware implementation might employ discrete logic circuits having logic gates for implementing logic functions on data signals, an application-specific integrated circuit (ASIC) having appropriate combinational logic gates, a programmable gate array (PGA), a field programmable gate array (FPGA), etc.

This invention has been described in terms of specific embodiments, implementations and configurations which are intended to be exemplary only. Persons of ordinary skill in the art will appreciate, having read this disclosure, that many obvious variations, modifications and refinements may be made without departing from the inventive concept(s) presented herein. The scope of the exclusive right sought by the Applicant(s) is therefore intended to be limited solely by the appended claims.

## Claims

1. A method performed by a mobile device (100), the method comprising:
receiving user input via a user interface (140) comprising keys arranged in a plurality of groups (200, 210, 220, 230, 240, 250, 260);
identifying which group of keys has received the user input;
in response to the user input, displaying on a display (150) characters corresponding to the group of keys that has received the user input; and
receiving further user input via the same group of keys to input one of the characters.

2. The method as claimed in claim 1 wherein the user input is received by a key within the group of keys, each key within the group of keys having a corresponding character of a keyboard.

3. The method as claimed in claim 1 wherein displaying comprises displaying along a bottom portion of the display (150) each of the characters corresponding to the keys of the group of keys (200, 210, 220, 230, 240, 250, 260) that has received the user input.

4. The method as claimed in claim 3 wherein displaying comprises graphically highlighting a selected character corresponding to the key of the group of keys (200, 210, 220, 230, 240, 250, 260) that has received the user input.

5. The method as claimed in any one of claims 1 to 4 wherein the keys are arranged in a plurality of left-side rows (200, 210, 220) and a plurality of right-side rows (230, 240, 250) and wherein displaying the group of keys comprises displaying characters corresponding to one of the plurality of left-side rows that has received first user input and simultaneously displaying characters corresponding to one of the plurality of right-side rows that has received second user input.

6. The method as claimed in any one of claims 1 to 4 wherein receiving user input comprises detecting one of a plurality of rows of keys (200, 210, 220, 230, 240, 250, 260) using capacitive touch sensors in the keys.

7. The method as claimed in claim 6 wherein receiving the further user input comprises providing mechanical haptic feedback in response to touching the key.

8. The method as claimed in any one of claims 1 to 7 wherein displaying the group of keys comprises predicting a word being spelled and graphically indicating a suggested key to complete the word.

9. A computer-readable medium comprising instructions in code which when loaded into a memory (120, 130) and executed by a processor (110) of a mobile device (100) cause the mobile device (100) to perform the method of any one of claims 1 to 8.

10. A mobile device (100) comprising:
a user interface (140) comprising a plurality of keys (155) arranged in a plurality of groups (200, 210, 220, 230, 240, 250, 260);
a processor (110) operatively coupled to the user input device to receive user input from the user input device and to identify which group of keys has received the user input; and
a display (150) operatively coupled to the processor (110) for displaying characters corresponding to the keys of the group in response to the user input, wherein further user input received via the same group of keys causes input of one of the characters.

11. The mobile device (10) as claimed in claim 10 wherein the user input is received by a key within the group of keys, each key within the group of keys having a corresponding character of a keyboard.

12. The mobile device (100) as claimed in claim 11 wherein the user input device is a keyboard (155) comprising a plurality of capacitive touch keys.

13. The mobile device (100) as claimed in claim 11 wherein the user input device is a keyboard (155) comprising a plurality of capacitive touch keys having haptic feedback.

14. The mobile device as claimed in any one of claims 10 to 13 wherein the user input device comprises a plurality of left-side rows of keys (200, 210, 220) and a plurality of right-side rows of keys (230, 240, 250).

15. The mobile device as claimed in any one of claims 10 to 14 wherein the user input device comprises:
three left-side rows of keys (200, 210, 220);
three right-side rows of keys (230, 240, 250) aligned with but spaced apart from the left-side rows of keys; and
a bottom row of keys (260) including a space bar key.

16. The mobile device (100) as claimed in any one of claims 10 to 15 wherein the keys are configured as a QWERTY keyboard (155).

17. The mobile device (100) as claimed in any one of claims 10 to 13 wherein the keys comprise capacitive touch sensors with haptic feedback and are arranged in a QWERTY keyboard (155) configuration as seven groups of keys consisting of an upper row split into left and right groups (200, 230), a middle row split into left and right groups (210, 240), a lower row split into left and right groups (220, 250), and a bottom row (260) disposed beneath the lower row.

## Patentansprüche

1. Verfahren, das durch eine mobile Vorrichtung (100) ausgeführt wird, das Verfahren umfassend:
Empfangen einer Benutzereingabe über eine Benutzeroberfläche (140), die Tasten umfasst, welche in mehreren Gruppen (200, 210, 220, 230, 240, 250, 260) angeordnet sind;
Identifizieren, welche Tastengruppe die Benutzereingabe empfangen hat;
in Reaktion auf die Benutzereingabe, Anzeigen auf einer Anzeige (150) von Zeichen, die der Tastengruppe entsprechen, welche die Benutzereingabe empfangen hat; und
Empfangen von weiterer Benutzereingabe über dieselbe Tastengruppe zum Eingeben von einem der Zeichen.

2. Verfahren nach Anspruch 1, wobei die Benutzereingabe durch eine Taste innerhalb der Tastengruppe empfangen wird, wobei jede Taste innerhalb der Tastengruppe ein entsprechendes Zeichen einer Tastatur aufweist.

3. Verfahren nach Anspruch 1, wobei das Anzeigen das Anzeigen entlang eines unteren Abschnitts der Tastatur (150) von jedem der Zeichen, die den Tasten der Tastengruppe (200, 210, 220, 230, 240, 250, 260) entsprechen, welche die Benutzereingabe empfangen hat, umfasst.

4. Verfahren nach Anspruch 3, wobei das Anzeigen das grafische Hervorheben eines ausgewählten Zeichens, das der Taste der Tastengruppe (200, 210, 220, 230, 240, 250, 260), entspricht, welche die Benutzereingabe empfangen hat, umfasst.

5. Verfahren nach einem der Ansprüche 1 bis 4, wobei die Tasten in mehreren linksseitigen Reihen (200, 210, 220) und mehreren rechtsseitigen Reihen (230, 240, 250) angeordnet sind, und wobei das Anzeigen der Tastengruppe das Anzeigen von Zeichen, die einer der mehreren linksseitigen Reihen entsprechen, welche erste Benutzereingabe empfangen hat, und gleichzeitiges Anzeigen von Zeichen, die einer der mehreren rechtsseitigen Reihen entsprechen, welche zweite Benutzereingabe empfangen hat, umfasst.

6. Verfahren nach einem der Ansprüche 1 bis 4, wobei das Empfangen von Benutzereingabe das Erkennen von einer von mehreren Tastenreihen (200, 210, 220, 230, 240, 250, 260) unter Verwendung von kapazitiven Berührungssensoren in den Tasten umfasst.

7. Verfahren nach Anspruch 6, wobei das Empfangen der weiteren Benutzereingabe das Vorsehen von mechanischer haptischer Rückmeldung in Reaktion auf das Berühren der Taste umfasst.

8. Verfahren nach einem der Ansprüche 1 bis 7, wobei das Anzeigen der Tastengruppe das Voraussagen eines Worts, das buchstabiert wird, und das grafische Anzeigen einer vorgeschlagenen Taste zum Vervollständigen des Worts umfasst.

9. Maschinenlesbares Medium, das Anweisungen in Code umfasst, welche, wenn sie in einen Speicher (120, 130) geladen und durch einen Prozessor (110) einer mobilen Vorrichtung (100) ausgeführt werden, bewirken, dass die mobile Vorrichtung (100) das Verfahren nach einem der Ansprüche 1 bis 8 ausführt.

10. Mobile Vorrichtung (100), umfassend:
eine Benutzeroberfläche (140), die mehrere Tasten (155) umfasst, welche in mehreren Gruppen (200, 210, 220, 230, 240, 250, 260) angeordnet sind;
einen Prozessor (110), der betriebsfähig an die Benutzereingabevorrichtung gekoppelt ist, um Benutzereingabe von der Benutzereingabevorrichtung zu empfangen und zu identifizieren, welche Tastengruppe die Benutzereingabe empfangen hat; und
eine Anzeige (150), die betriebsfähig an den Prozessor (110) gekoppelt ist, zum Anzeigen von Zeichen, welche den Tasten der Gruppe entsprechen, in Reaktion auf die Benutzereingabe, wobei eine weitere Benutzereingabe, die über dieselbe Tastengruppe empfangen wird, eine Eingabe von einem der Zeichen bewirkt.

11. Mobile Vorrichtung (10) nach Anspruch 10, wobei die Benutzereingabe durch eine Taste innerhalb der Tastengruppe empfangen wird, wobei jede Taste innerhalb der Tastengruppe ein entsprechendes Zeichen einer Tastatur aufweist.

12. Mobile Vorrichtung (100) nach Anspruch 11, wobei die Benutzereingabevorrichtung eine Tastatur (155) ist, die mehrere kapazitive Berührungstasten umfasst.

13. Mobile Vorrichtung (100) nach Anspruch 11, wobei die Benutzereingabevorrichtung eine Tastatur (155) ist, die mehrere kapazitive Berührungstasten mit haptischer Rückmeldung umfasst.

14. Mobile Vorrichtung nach einem der Ansprüche 10 bis 13, wobei die Benutzereingabevorrichtung mehrere linksseitige Tastenreihen (200, 210, 220) und mehrere rechtsseitige Tastenreihen (230, 240, 250) umfasst.

15. Mobile Vorrichtung nach einem der Ansprüche 10 bis 14, wobei die Benutzereingabevorrichtung umfasst:
drei linksseitige Tastenreihen (200, 210, 220);
drei rechtsseitige Tastenreihen (230, 240, 250), die an den linksseitigen Tastenreihen ausgerichtet, jedoch davon beabstandet sind; und
eine unterste Tastenreihe (260), die eine Leertaste beinhaltet.

16. Mobile Vorrichtung (100) nach einem der Ansprüche 10 bis 15, wobei die Tasten als eine QWERTY-Tastatur (155) konfiguriert sind.

17. Mobile Vorrichtung (100) nach einem der Ansprüche 10 bis 13, wobei die Tasten kapazitive Berührungssensoren mit haptischer Rückmeldung umfassen und in einer QWERTY-Tastatur- (155) Konfiguration als sieben Tastengruppen angeordnet sind, die aus einer oberen Reihe, welche in linke und rechte Gruppen (200, 230) aufgeteilt ist, einer mittleren Reihe, welche in linke und rechte Gruppen (210, 240) aufgeteilt ist, einer unteren Reihe, welche in linke und rechte Gruppen (220, 250) aufgeteilt ist, und einer untersten Reihe (260), die unterhalb der unteren Reihe angeordnet ist, bestehen.

## Revendications

1. Procédé effectué par un dispositif mobile (100), le procédé comprenant les étapes consistant à :
recevoir une entrée utilisateur via une interface utilisateur (140) comprenant des touches agencées en une pluralité de groupes (200, 210, 220, 230, 240, 250, 260) ;
identifier quel groupe de touches a reçu l'entrée utilisateur ;
en réponse à l'entrée utilisateur, afficher sur un afficheur (150) des caractères correspondant au groupe de touches qui a reçu l'entrée utilisateur ; et
recevoir une entrée utilisateur supplémentaire via le même groupe de touches pour entrer l'un des caractères.

2. Procédé selon la revendication 1, dans lequel l'entrée utilisateur est reçue par une touche à l'intérieur du groupe de touches, chaque touche à l'intérieur du groupe de touches ayant un caractère correspondant d'un clavier.

3. Procédé selon la revendication 1, dans lequel l'affichage comprend l'affichage le long d'une partie du bas de l'afficheur (150) de chacun des caractères correspondant aux touches du groupe de touches (200, 210, 220, 230, 240, 250, 260) qui a reçu l'entrée utilisateur.

4. Procédé selon la revendication 3, dans lequel l'affichage comprend la mise en évidence graphique d'un caractère sélectionné correspondant à la touche du groupe de touches (200, 210, 220, 230, 240, 250, 260) qui a reçu l'entrée utilisateur.

5. Procédé selon l'une quelconque des revendications 1 à 4, dans lequel les touches sont agencées en une pluralité de rangées du côté gauche (200, 210, 220) et une pluralité de rangées du côté droit (230, 240, 250) et dans lequel l'affichage du groupe de touches comprend l'affichage de caractères correspondant à l'une de la pluralité de rangées du côté gauche qui a reçu une première entrée utilisateur et l'affichage simultané de caractères correspondant à l'une de la pluralité de rangées du côté droit qui a reçu une seconde entrée utilisateur.

6. Procédé selon l'une quelconque des revendications 1 à 4, dans lequel la réception d'une entrée utilisateur comprend la détection de l'une d'une pluralité de rangées de touches (200, 210, 220, 230, 240, 250, 260) en utilisant des capteurs tactiles capacitifs dans les touches.

7. Procédé selon la revendication 6, dans lequel la réception de l'entrée utilisateur supplémentaire comprend la fourniture d'une rétroaction haptique mécanique en réponse au toucher de la touche.

8. Procédé selon l'une quelconque des revendications 1 à 7, dans lequel l'affichage du groupe de touches comprend la prédiction d'un mot qui est orthographié et l'indication graphique d'une touche suggérée pour compléter le mot.

9. Support lisible par ordinateur comprenant des instructions en code qui, lorsqu'elles sont chargées dans une mémoire (120, 130) et exécutées par un processeur (110) d'un dispositif mobile (100), amènent le dispositif mobile (100) à effectuer le procédé selon l'une quelconque des revendications 1 à 8.

10. Dispositif mobile (100) comprenant :
une interface utilisateur (140) comprenant une pluralité de touches (155) agencées en une pluralité de groupes (200, 210, 220, 230, 240, 250, 260) ;
un processeur (110) couplé fonctionnellement au dispositif d'entrée utilisateur pour recevoir une entrée utilisateur en provenance du dispositif d'entrée utilisateur et pour identifier quel groupe de touches a reçu l'entrée utilisateur ; et
un afficheur (150) couplé fonctionnellement au processeur (110) pour afficher des caractères correspondant aux touches du groupe en réponse à l'entrée utilisateur, où une entrée utilisateur supplémentaire reçue via le même groupe de touches provoque l'entrée de l'un des caractères.

11. Dispositif mobile (10) selon la revendication 10, dans lequel l'entrée utilisateur est reçue par une touche à l'intérieur du groupe de touches, chaque touche à l'intérieur du groupe de touches ayant un caractère correspondant d'un clavier.

12. Dispositif mobile (100) selon la revendication 11, dans lequel le dispositif d'entrée utilisateur est un clavier (155) comprenant une pluralité de touches tactiles capacitives.

13. Dispositif mobile (100) selon la revendication 11, dans lequel le dispositif d'entrée utilisateur est un clavier (155) comprenant une pluralité de touches tactiles capacitives ayant une rétroaction haptique.

14. Dispositif mobile selon l'une quelconque des revendications 10 à 13, dans lequel le dispositif d'entrée utilisateur comprend une pluralité de rangées de touches du côté gauche (200, 210, 220) et une pluralité de rangées de touches du côté droit (230, 240, 250).

15. Dispositif mobile selon l'une quelconque des revendications 10 à 14, dans lequel le dispositif d'entrée utilisateur comprend :
trois rangées de touches du côté gauche (200, 210, 220) ;
trois rangées de touches du côté droit (230, 240, 250) alignées avec, mais espacées des rangées de touches du côté gauche ; et
une rangée de touches du bas (260) incluant une touche de barre d'espace.

16. Dispositif mobile (100) selon l'une quelconque des revendications 10 à 15, dans lequel les touches sont configurées comme un clavier QWERTY (155).

17. Dispositif mobile (100) selon l'une quelconque des revendications 10 à 13, dans lequel les touches comprennent des capteurs tactiles capacitifs avec une rétroaction haptique et sont agencées dans une configuration de clavier QWERTY (155) comme sept groupes de touches constitués d'une rangée supérieure partagée en groupes gauche et droit (200, 230), d'une rangée du milieu partagée en groupes gauche et droit (210, 240), d'une rangée inférieure partagée en groupes gauche et droit (220, 250), et d'une rangée du bas (260) disposée sous la rangée inférieure.
